# EUROPÄISCHE PATENTSCHRIFT

(11) **EP 3 973 745 B1**
(45) Veröffentlichungstag und Bekanntmachung des Hinweises auf die Patenterteilung: **10.05.2023**
(21) Anmeldenummer: 20730178.9
(22) Anmeldetag: 20.05.2020
(51) Int. Cl.: H05B 45/46, H05B 45/347

(54) **VERFAHREN UND VORRICHTUNGEN ZUR REGELUNG DER AUSGANGSSPANNUNG EINES SPANNUNGSREGLERS**
METHOD AND APPARATUSES FOR REGULATING THE OUTPUT VOLTAGE OF A VOLTAGE REGULATOR
PROCÉDÉ ET DISPOSITIFS POUR RÉGULER LA TENSION DE SORTIE D'UN RÉGULATEUR DE TENSION

(30) Priorität: 23.05.2019 DE 102019113858
(43) Veröffentlichungstag der Anmeldung: 30.03.2022
(73) Patentinhaber: Elmos Semiconductor SE, 44227 Dortmund (DE)
(72) Erfinder: LEITNER, Carsten, 13507 Berlin (DE); KRIEGER, André, 12459 Berlin (DE); SCHMITZ, Christian, 44575 Castrop-Rauxel (DE); GEISTERT, Thomas, 47167 Duisburg (DE)
(86) Internationale Anmeldenummer: PCT/DE2020/100437
(87) Internationale Veröffentlichungsnummer: WO 2020/233751

(56) Entgegenhaltungen:
- EP-A1- 2 293 165
- DE-A1-102017 116 647
- DE-B4-102005 028 403
- US-A1- 2012 056 865
- US-B2- 8 519 632

## Beschreibung

### Allgemeine Einleitung

Die Erfindung richtet sich auf ein Verfahren und eine zugehörige Vorrichtung zur Regelung der Ausgangsspannung (V₀) am Ausgang (Vₒᵤₜ) eines Spannungsreglers (VREG) zur Versorgung einer Beleuchtungsvorrichtung mit mehreren, mindestens aber zwei integrierten Schaltkreisen (IC1, IC2) mit jeweils mindestens einer LED-Gruppe (LED₁ₐ, _{LE}, LED₂) mit jeweils einer zugehöriger LED-Stromquelle, einem LED-Treiber (LED DRV), je Schaltkreis (IC1, IC2) mit elektrischer Energie. Im Gegensatz zum Stand der Technik wird das gemeinsame Rückkoppelsignal aus den Rückkoppelsignalen der Schaltkreise (IC1, IC2) nicht über Dioden, sondern über spannungsgesteuerte Stromquellen gebildet.

LED-Beleuchtungen werden in vermehrtem Umfang in der Automobil-Industrie eingesetzt. Hierbei stellt sich das Problem, dass die Leucht-Dioden nicht alle die gleiche Schwellspannung aufweisen, die LEDs aber alle aus einer Spannungsquelle mit elektrischer Energie versorgt werden. Die Leuchtstärke der LEDs wird typischerweise über jeweilige Stromquellen eingestellt. Über diese Stromquellen fällt elektrische Leistung ab, die minimiert werden muss. Die Spannungsquelle ist bevorzugt ein energetisch günstiger Schaltwandler, der dementsprechend nur wenig Abwärme erzeugt. Es stellt sich nun das Problem, wie mehrere integrierte Schaltungen, die jede für sich typischerweise mehrere LED-Stromquellen aufweisen, eine solche vorgeschaltete Spannungsquelle effizient und einfach regeln können.

### Stand der Technik

Aus dem Stand der Technik sind beispielsweise folgende Schriften aus dem technischen Umfeld der Erfindung bekannt:
Aus der DE 10 2006 055 312 A1 ist eine Antriebsvorrichtung für ein farbiges Hintergrundlicht bekannt. Dabei wird jeder LED-Strang aufwendig mit je einer Spannungsquelle und je einer Stromquelle versehen, um das Problem der kombinierten Regelung zu umgehen.

Aus der DE 10 318 780 A1 ist eine Ansteuerschaltung zum Erzeugen von zwei oder mehr geregelten oder gesteuerten Konstantströmen durch je einen Verbraucher, z.B. eine LED, mit einer gemeinsamen in der Größe einstellbaren Versorgungsspannung bekannt, die die einzelnen Konstantstromquellen speist. Die technische Lehre der DE 10 318 780 A1 ist dadurch gekennzeichnet, dass sich die Versorgungsspannung in ihrer Größe jeweils auf die Konstantstromquelle einstellt, die generell oder zum jeweiligen Zeitpunkt die größte Gesamtimpedanz speist und damit die größte Versorgungsspannung erfordert. Dabei wird der Betrag der Versorgungsspannung so minimal eingestellt, dass der Betrag der auftretenden Spannung über einer der Stromquellen gerade zu deren Betrieb ausreicht. Die Regelung mehrerer LED-Zweige wird dabei durch eine Diodenauswahlsteuerung gelöst, die eine minimale Spannung einer Stromquelle selektiert.

Aus der US 8 319 449 B2 ist eine elektronische Vorrichtung zum Ansteuern einer lichtemittierenden Halbleitervorrichtung bekannt. Die Vorrichtung der US 8 319 449 B2 umfasst
- einen Rückkopplungseingang, der zum Empfangen eines Erfassungswerts konfiguriert und angeordnet ist,
- einen Ausgangsport, der konfiguriert und angeordnet ist, um die lichtemittierende Vorrichtung als Reaktion auf eine Stromquelle zuzuführen und
- eine von der lichtemittierenden Halbleitervorrichtung elektrisch entkoppelte oder isolierte Steuerschaltung.

Die Steuerschaltung ist dabei so konfiguriert und angeordnet, dass sie als Reaktion auf den von der Steuerung empfangenen Erfassungswert über den Ausgangsport eine Schaltnetzteilversorgung steuert, um die lichtemittierende Halbleitervorrichtung zu versorgen. Die Steuerung der Schaltnetzteilversorgung erfolgt dabei über den Rückkopplungseingang, der eine Spannung über der Stromquelle anzeigt, um einen Strom durch die lichtemittierende Halbleitervorrichtung zu bestimmen. Dabei die wird Schaltnetzteilversorgung so gesteuert, dass die Spannung über der Stromquelle auf einem für den Gerätebetrieb notwendigen, minimalen Pegel gehalten wird. Eine Schaltung selektiert die minimale Stromquellenspannung als Regelspannung für die Spannungsquelle.

Aus der US 2010 / 0 026 209 A1 ist eine LED-Treiberschaltung zum Ansteuern einer LED-Lichtquelle bekannt. Die LED-Treiberschaltung der US 2010 / 0 026 209 A1 umfasst einen Regler, der mit der LED-Lichtquelle gekoppelt ist, um dieser eine Ausgangsspannung zu liefern, eine Stromquelle, die mit der LED-Lichtquelle gekoppelt ist, um deren Ansteuerstrom einzustellen; und eine Steuerung, die mit der Stromquelle und dem Regler gekoppelt ist, um eine Spannung der Stromquelle zu erfassen, um ein Steuersignal für den Regler zu erzeugen, um die Ausgangsspannung zu regeln. Die technische Lehre der US 2010 / 0 026 209 A1 löst nicht das Problem, wie mehrere Controller aufwandsarm miteinander zu koppeln sind.

Aus der US 7 157 866 B2 ist eine Antriebsvorrichtung für ein Lichtemissionselement bekannt. Dieses umfasst entsprechend der technischen Lehre der US 7 157 866 B2, eine Erhöhungsschaltung zum Erhöhen einer gegebenen Stromversorgungsspannung, um eine erforderliche Erhöhungsspannung an einem Ausgangsende der Erhöhungsschaltung zu erzeugen, eine Spannungsumschaltschaltung zum selektiven Ausgeben der Stromversorgungsspannung oder Aufwärtsspannung an einem Umschaltspannungsausgangsende der Spannungsumschaltschaltung, einen ersten Treiber, der mit einer ersten Lichtemissionselementgruppe in Reihe geschaltet ist und zwischen dem geschalteten Spannungsausgangsende und einem Referenzspannungsknoten angeschlossen ist, wobei der erste Treiber durch ein erstes Befehlssignal gesteuert wird und einen zweiten Treiber, der mit einer zweiten Lichtemissionselementgruppe in Reihe geschaltet ist, die zu einem größeren Spannungsabfall als die erste Gruppe führt, und zwischen dem Ausgangsende der Aufwärtsspannungsausgabe und dem Referenzspannungsknoten angeschlossen ist, wobei der zweite Treiber durch ein zweites Befehlssignal gesteuert wird. Auch die technische Lehre der US 7 157 866 B2 löst nicht das Problem, wie mehrere Controller aufwandsarm miteinander zu koppeln sind.

Aus der EP 1499 165 B1 ist eine Lasttreibereinrichtung bzw. -vorrichtung zum Treiben vielfacher Lasten bekannt, wobei jede in Reihe mit einer zugehörigen Konstantstromquelle verbunden ist, wobei die Lasttreibervorrichtung eine Stromversorgungsschaltung aufweist, welche eine Ausgangsspannung für die vielfachen Lasten liefert, welche durch Umwandeln einer Eingangsspannung in die Ausgangsspannung erhalten wird. Die technische Lehre der EP 1 499 165 B1 ist dadurch gekennzeichnet, dass die Konstantstromquellen vom einstellbaren Typ sind, und jede der Konstantstromquellen in der Lage ist, einen einstellbaren konstanten Ausgangsstrom für die entsprechende Last zu liefern; und dass die Ausgangsspannung so gesteuert wird, dass sie eine niedrigste Spannung der Spannungen an den gemeinsamen Knoten zwischen jeder der vielfachen Lasten und seiner jeweiligen Konstantstromquelle konstant hält. Die technische Lösung der EP 1499 165 B1 ist ähnlich einer der zuvor beschriebenen Lösungen. Auch die technische Lehre der EP 1499 165 B1 löst nicht das Problem, wie mehrere Controller aufwandsarm miteinander zu koppeln sind. Durch die Spannungssignale ist die Lösung sehr anfällig gegen EMV-Signale und Potenzialversatz.

Aus der US 8 519 632 B2 ist eine Ansteuervorrichtung für mindestens eine Reihenschaltung mehrerer Leuchtdioden bekannt. Eine Ansteuervorrichtung entsprechend der technischen Lehre der US 8 519 632 B2 umfasst eine Spannungsregeleinheit, die dazu eingerichtet ist, eine Betriebsspannung für die mindestens eine Serienschaltung der Leuchtdioden zu regeln, und eine Stromregelungseinheit für jede der mindestens einen Reihenschaltung von Leuchtdioden, wobei die Stromregelungseinheit dazu eingerichtet ist, den Strom durch die bestimmte Reihenschaltung von Leuchtdioden zu regeln, und wobei die Stromregelungseinheit mit der Spannungsregeleinheit verbunden ist, um ein Stromregelungssignal an die Spannungsregeleinheit zu übertragen. Die Spannungsregeleinheit enthält einen Spannungsteiler, wobei der Spannungsteiler zwischen eine Betriebsspannung, der mindestens einen Reihenschaltung von Leuchtdioden, die von der Spannungsregeleinheit bereitgestellt wird, und Masse geschaltet ist. Ein Abgriff des Spannungsteilers und ein Eingang einer ersten Regelungsstufe sind mit einem Ausgang einer zweiten Regelungsstufe verbunden, so dass, wenn das Stromregelungssignal eine vorbestimmte Spannung überschreitet, eine Spannung am Abgriff des Spannungsteilers verringert wird. Auch die technische Lehre der US 8 519 632 B2 verwendet Spannungssignale, die durch Dioden (Bezugszeichen 51, 52, 53 der US 8 519 632 B2) selektiert werden. Durch die Spannungssignale ist die Lösung sehr anfällig gegen EMV-Signale und Potenzialversatz.

Aus der DE 10 2005 028 403 B4 ist eine Stromquellenanordnung bekannt, bei der über einen Regelbus mittels eines Spannungssignals dem Spannungsregler das Unterschreiten eines Mindestspannungsabfalls in einem der Stromquellen zur Versorgung eines LED-Strangs mitgeteilt wird. Durch die Spannungssignale ist die Lösung sehr anfällig gegen EMV-Signale und Potenzialversatz.

Aus der WO 2013 / 030 047 A1 ist eine Lösung bekannt, bei der je Stromquelle ein Spannungssignal entsprechend dem Spannungsabfall über dieser Stromquelle an eine Zentraleinheit analog übertragen wird und dort in ein Spannungssteuersignal zur Steuerung einer gemeinsamen Spannungsversorgung übertragen wird. Durch die Spannungssignale ist die Lösung sehr anfällig gegen EMV-Signale und Potenzialversatz.

Aus der US 2008 / 0 122 383 A1 ist ein in LED-Treiber zum Einspeisen von elektrischem Strom in eine LED-Schaltung bekannt, die entweder aus einer einzelnen LED oder einer Vielzahl von LEDs besteht, die seriell miteinander verbunden sind, wobei der LED-Treiber einen Konstantstromschaltungsteil, der seriell mit der LED-Schaltung verbunden ist und einen Strom auf einen vorbestimmten Wert einstellt, der von einer stromaufwärtigen zu einer stromabwärtigen Seite davon fließt, einen Spannungseinstellungsteil, der seriell mit dem Konstantstromschaltungsteil verbunden ist, wobei der Spannungseinstellungsteil eine Potentialdifferenz zwischen der stromaufwärtigen und der stromabwärtigen Seite mit einem Schaltregler einstellt, umfasst. Auch die technische Lehre der US 2008 / 0 122 383 A1 löst nicht das Problem, wie mehrere Controller aufwandsarm miteinander zu koppeln sind.

Auch aus der US 2011 / 0 043 114 A1, der US 2007 / 0 139 317 A1, der US 2009 / 0 230 874 A1, der US 2012 / 0 268 012 A1, der EP 2 600 695 B1 und der US 2011 / 0 012 521 A1 sind Lösungen bekannt, bei der je Stromquelle ein Spannungssignal entsprechend dem Spannungsabfall über dieser Stromquelle an eine Zentraleinheit analog übertragen wird und dort in ein Spannungssteuersignal zur Steuerung einer gemeinsamen Spannungsversorgung übertragen wird. Durch die Spannungssignale ist die Lösung sehr anfällig gegen EMV-Signale und Potenzialversatz.

Aus der US 2010 / 0 201 278 A1 ist eine Lösung bekannt, bei der die Controller in eine Schleife geschaltet werden. Jeder Controller bestimmt die Spannungswerte der Spannungsabfälle über seine LED-Stromquellen und vergleicht den minimalen Wert dieser Spannungswerte mit einem Spannungswert an einem Spannungswerteingang. Ist der eigene minimale Spannungswert kleiner als dieser Spannungswert am Spannungswerteingang, so gibt der jeweilige Controller seinen minimalen Spannungswert an den Spannungswerteingang des nachfolgenden Controllers. Ist der eigene minimale Spannungswert größer als dieser Spannungswert am Spannungswerteingang, so gibt der jeweilige Controller diesen Spannungswert am Spannungswerteingang an den Spannungswerteingang des nachfolgenden Controllers. Durch die Spannungssignale ist die Lösung sehr anfällig gegen EMV-Signale und Potenzialversatz.

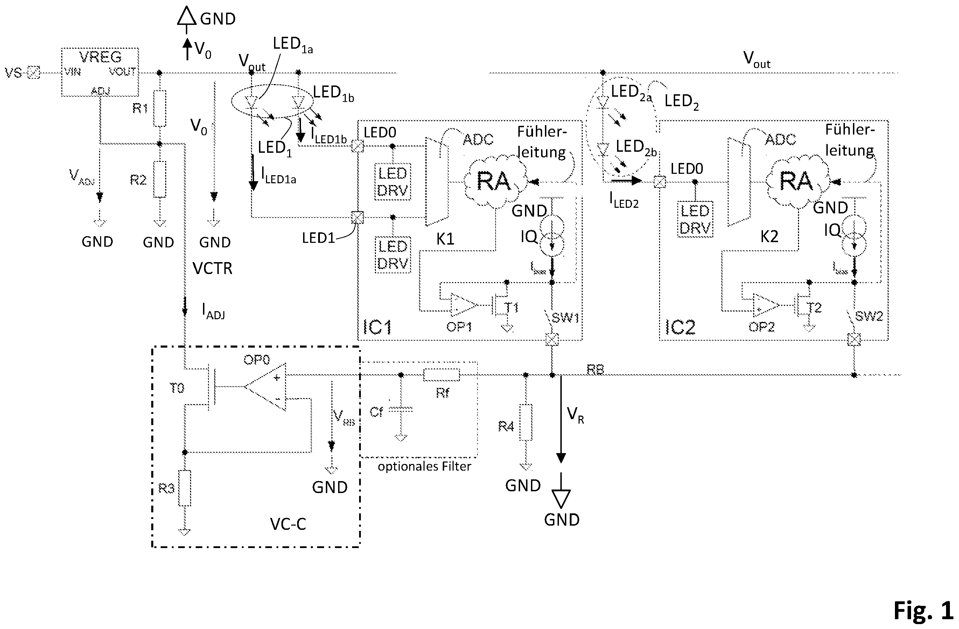

Die US 2011 / 0 012 521 A1 erfordert die Übertragung der Referenzwerte über eine Mehrzahl an Leitungen (Bezugszeichen Vf1^{∼}Vfi, Vfi+1^{∼}Vf2i, Vf2i+1^{∼}Vf3i in Figur 1 der US 2011 / 0 012 521 A1). Dies hat einen erheblichen Verdrahtungsaufwand und einen erheblichen Regelauswand zur Folge. Die Auswertung erfolgt in der technischen Lehre der US 2011 / 0 012 521 A1 durch einen Mikrorechner, was die Notwendigkeit eines Analog-zu-Digitalwandlers und einer PWM-Einheit zur Digital-zu-Analog-Wandlung zur Folge hat.

Die US 2010 / 0 201 278 A1 offenbart ein Verfahren und eine Vorrichtung zur Regelung einer Ausgangsspannung. In der technischen Lehre der US 2010 / 0 201 278 A1 ermittelt jeder LED-Treiber für sich, einen minimalen Spannungswert betreffend die Spannungsabfälle über seine LED-Stromquellen, vergleicht diesen Spannungsabfallswert mit seinem Vorgänger in einer Kette und gibt den minimalen Spannungswert dieser beiden Spannungswerte an seinen Nachfolger weiter. Im Falle eines Ausfalls eines Treibers kommt es somit zum Totalausfall der Regelung.

Aus der DE 10 2017 116647 A1 ist ein Verfahren zur Kalibrierung einer Versorgungsspannung für Beleuchtungssysteme, die eine Vielzahl von LED-Strängen umfassen, und eine zugehörige Vorrichtung bekannt. Dabei offenbart die DE 10 2017 116647 A1 eine Vorrichtung zur Versorgung mehrerer, mindestens aber zwei LED-Gruppen mit elektrischer Energie, die einen Spannungsregler mit einem Spannungsreglerausgang, mindestens zwei integrierte Schaltkreise und einen Regelbus umfasst. Jeder der integrierten Schaltkreise umfasst zumindest einen LED-Anschluss für zumindest eine LED-Gruppe. Jeder der integrierten Schaltkreise umfasst zumindest einen LED-Treiber für die Energieversorgung dieser LED-Gruppe über einen dieser LED-Gruppe zugehörigen LED-Anschluss. Jeder Der integrierten Schaltkreise umfasst zumindest ein Messmittel dieses integrierten Schaltkreises zur Erfassung von Spannungsdifferenzen zwischen den Potenzialen von LED-Anschlüssen dieses Integrierten Schaltkreises und einem Bezugspotenzial.

Aus der US 2012 / 056 865 A1 ist eine ähnliche Vorrichtung bekannt, die auf einem digitalen Regelbus (z.B. LIN, CAN) basiert. Aus der EP 2 293 165 A1 ist eine Multistromquelle mit mehreren Stromquellen bekannt, die mit einem Spannungswandler gekoppelt sind.

### Aufgabe

Dem Vorschlag liegt daher die Aufgabe zugrunde, eine Lösung zu schaffen, die die obigen Nachteile des Stands der Technik nicht aufweist und weitere Vorteile aufweist.

### Lösung der Aufgabe und Merkmale der Erfindung

Die Aufgabe wird durch ein Verfahren nach Anspruch 1 und eine Vorrichtung nach Anspruch 2 gelöst. Die Erfindung betrifft eine Spannungsregelung für eine Beleuchtungs- und/oder Lichtzeichengebervorrichtung entsprechend Figur 1. Die Erfindung wird anhand der beispielhaften Figur 1 erläutert. Maßgeblich für die beanspruchte technische Lehre sind die Ansprüche. In dem Beispiel der Figur 1 sind zur besseren Übersichtlichkeit nur zwei integrierte Schaltkreise (IC1, IC2) eingezeichnet. Die Beschreibung ist jedoch zur besseren Klarheit für n integrierte Schaltkreise (IC1, IC2 bis ICn) ausgeführt, wobei n eine ganze positive Zahl größer 1 ist.

Die Spannungsregelung erfolgt bevorzugt so, wie in der Figur 1 dargestellt. Kern der Erfindung ist ein spannungsgesteuerter Spannungsregler, der in einen eigentlichen spannungsgesteuerten Spannungsregler (VREG), wie er mannigfach aus der Patentliteratur bekannt ist, und umgebende Beschaltung (R1, R2, VC-C, R₄) zerfällt.

Die vorgeschlagene Vorrichtung umfasst mehrere, vorzugsweise n, mindestens aber zwei, integrierte Schaltkreise (IC1, IC2 bis ICn). Im Folgenden werden diese n integrierten Schaltkreise (IC1, IC2, bis ICn) auch nur als "ICs" bezeichnet.

Es wird nun der vorgeschlagene Regelkreis für die Regelung des Spannungsreglers (VREG) beschrieben.

Der Spannungsregler (VREG) wird durch einen zusätzlichen Strom (I_{ADJ}) in seinen Rückkopplungspfad (R1, R2) mittels des Spannungsregelsignals (VCTR) vertrimmt. Hier wird beispielhaft ein Linearregler als Spannungsregler (VREG) angenommen, der nach einer internen Referenz des Spannungsreglers (VREG) die Spannung an seinen Spannungsreglerausgang (Vₒᵤₜ) über den ersten Widerstand (R1) nachregelt. Es sind erfindungsgemäß aber auch andere Regler an dieser Stelle einsetzbar.

Der Betrag dieses zusätzlichen Stroms (I_{ADJ}) wird durch die Spannung eines gemeinsamen Regelbusses (RB) der beteiligten n integrierten Schaltkreise (IC1, IC2, bis ICn) gegenüber dem Bezugspotenzial(GND) mit Hilfe eines Spannungs-zu-Strom-Wandlers (VC-C) gesteuert. Der Spannungs-zu Strom-Wandler (VC-C) umfasst in dem Beispiel der Figur 1 den nullten Differenzverstärker (OP0), den dritten Widerstand (R3) und den nullten Transistor (T0). Eine Verringerung der Regelbus-Spannung (V_{RB}) führt in dem Beispiel der Figur 1 zu einer Erhöhung der LED-Versorgungsspannung in Form einer Spannungserhöhung am Spannungsreglerausgang (V_{OUT}). Andere Konstruktionen mit einem anderen Verhalten, aber nach dem gleichen Konstruktionsprinzip sind denkbar.

Alle an den Regelbus (RB) angeschlossenen integrierten Schaltkreise (IC1, IC2, bis ICn) stellen die Regelbusspannung (V_{RB}) an diesem Regelbus (RB) ein, wobei sich die niedrigste von einem integrierten Schaltkreis (IC1, IC2, bis ICn) auf den Regelbus (RB) erzeugte Spannung sich tatsächlich einstellt. Dies wird nun jedoch nicht durch eine Diodenverschaltung erreicht, wie aus dem Stand der Technik bekannt, sondern durch eine Zusammenschaltung mehrerer spannungsgesteuerter Stromquellen aus den Transistoren (T1, T2 bis Tn) dieser Stromquellen.

Dies wird in dem ersten integrierten Schaltkreis (IC1) durch den Open-Drain-Treiber aus erstem Differenzverstärker (OP1) und erstem Transistor (T1) sichergestellt. Der erste Differenzverstärker (OP1) stellt dabei für den ersten Transistor (T1) eine erste Referenzspannung bereit. Der erste Transistor (T1) arbeitet dadurch als eine erste Stromquelle.

In dem zweiten integrierten Schaltkreis (IC2) wird dies durch den Open-Drain-Treiber aus zweitem Differenzverstärker (OP2) und zweitem Transistor (T2) sichergestellt. Der zweite Differenzverstärker (OP2) stellt dabei für den zweiten Transistor (T2) eine zweite Referenzspannung bereit. Der zweite Transistor (T2) arbeitet dadurch als eine zweite Stromquelle.

In dem nicht gezeichneten optionalen dritten integrierten Schaltkreis (IC3) wird dies durch den Open-Drain-Treiber aus drittem Differenzverstärker (OP3) und drittem Transistor (T3) sichergestellt. Der dritte Differenzverstärker (OP3) stellt dabei für den dritten Transistor (T3) eine dritte Referenzspannung bereit. Der dritte Transistor (T3) arbeitet dadurch als eine dritte Stromquelle. Der nicht gezeichnete dritte integrierte Schaltkreis (IC3) wird, sofern vorhanden, hier beispielhaft als analog zu dem zweiten integrierten Schaltkreis (IC2) in Bezug auf die für die hier besprochenen Vorrichtungsteile des zweiten integrierten Schaltkreises (IC2) aufgebaut angenommen.

In dem nicht gezeichneten optionalen vierten integrierten Schaltkreis (IC4) wird dies durch den Open-Drain-Treiber aus viertem Differenzverstärker (OP4) und viertem Transistor (T4) sichergestellt. Der vierte Differenzverstärker (OP4) stellt dabei für den vierten Transistor (T4) eine vierte Referenzspannung bereit. Der vierte Transistor (T4) arbeitet dadurch als eine vierte Stromquelle. Der nicht gezeichnete vierte integrierte Schaltkreis (IC4) wird, sofern vorhanden, hier beispielhaft als analog zu dem zweiten integrierten Schaltkreis (IC2) in Bezug auf die für die hier besprochenen Vorrichtungsteile des zweiten integrierten Schaltkreises (IC2) aufgebaut angenommen.

Dies wird optional bis zu dem optional vorhandenen n-ten integrierten Schaltkreis (ICn) fortgesetzt.

In diesem nicht gezeichneten optionalen n-ten integrierten Schaltkreis (ICn) wird dies durch den Open-Drain-Treiber aus n-tem Differenzverstärker (OPn) und n-tem Transistor (Tn) sichergestellt. Der n-te Differenzverstärker (OPn) stellt dabei für den n-ten Transistor (Tn) eine n-te Referenzspannung bereit. Der n-te Transistor (Tn) arbeitet dadurch als eine n-te Stromquelle. Der nicht gezeichnete n-te integrierte Schaltkreis (ICn) wird, sofern vorhanden, hier beispielhaft als analog zu dem zweiten integrierten Schaltkreis (IC2) in Bezug auf die für die hier besprochenen Vorrichtungsteile des zweiten integrierten Schaltkreises (IC2) aufgebaut angenommen.

Weist das System mehr als zwei integrierte Schaltkreise (IC1, IC2) auf, so setzt sich dies somit entsprechend für die ggf. vorhandenen weiteren integrierten Schaltkreise (IC3 bis ICn), also einen möglichen, nicht gezeichneten dritten integrierten Schaltkreis (IC3), einen möglichen, nicht gezeichneten vierten integrierten Schaltkreis (IC4) bis zu einem möglichen, nicht gezeichneten n-ten integrierten Schaltkreise (ICn), fort, wobei n eine ganze positive Zahl größer 1 ist. Wie bereits erwähnt sind die Bezeichnungen IC3, IC4 und ICn korrespondierend zu den Bezugszeichen IC1 und IC2 zu verstehen. Diese Bezeichnungen sind hier zur besseren Klarheit aufgeführt. Es handelt sich somit bei diesen Bezeichnungen nicht um Bezugszeichen, da sie nicht in den Zeichnungen zu finden sind, da die Zeichnungen zur besseren Klarheit nicht mit unnötiger Komplexität belastet wurden. Dem Fachmann ist klar, dass der Regelbus (RB) auf n integrierte Schaltkreise (IC1 bis ICn) erweitert werden kann. In jedem dieser integrierten Schaltkreise (IC1, IC2 bis ICn) wird über einen jeweiligen Regler (RA) die Spannung am jeweiligen Transistorknoten (K1, K2 bis Kn) erfasst und über den jeweiligen zugehörigen Differenzverstärker (OP1, OP2 bis OPn) des jeweiligen integrierten Schaltkreises (IC1 bis ICn) nachgeregelt.

Da jeder IC der ICs (IC1 bis ICn) damit nur einen Strom aus dem Regelbus (RB) gegen das Bezugspotenzial (GND) ableiten kann, ist es nötig, dass über eine jeweilige Konstantstromquelle (IQ) des jeweiligen integrierten Schaltkreises (IC1 bis ICn) oder entsprechend an den Regelbus angeschlossene Widerstände (hier nicht eingezeichnet) dem Regelbus (RB) ein elektrischer Strom (I_{bias}) zugeführt wird. Bevorzugt ist die Zuleitung über besagte Konstantstromquellen (IQ) der jeweiligen integrierten Schaltkreise (IC1, IC2 bis ICn)

Jeder integrierte Schaltkreis weist typischerweise einen Analog-zu-Digital-Wandler (ADC) auf. Bevorzugt misst jeder der integrierten Schaltkreise (IC1, IC2, bis ICn) mittels seines Analog-zu-Digital-Wandlers (ADC) die Arbeitsspannungen ihrer aktiven LED-Kanäle und /oder die Spannungsabfallwerte der Spannungsabfälle über die als Stromquellenversorgungen der LED-Gruppen (LED₁ bis LEDₙ) arbeitenden LED-Treiber (LED-DRV) dieses integrierten Schaltkreises der integrierten Schaltkreise (IC1, IC2 bis ICn). Wenn in dieser Offenlegung von LED-Gruppen die Rede ist können dies Zusammenschaltungen mehrerer LEDs sein. Beispielsweise kann eine LED-Gruppe (z.B. LED₁) aus einer Parallelschaltung zweier LED-Gruppen (LED_{1b}, LED_{1b}) bestehen. Ggf. können Enden dieser parallelgeschalteten LED-Gruppen von unterschiedlichen LED-Treibern (LED-DRV) getrieben werden. LED-Gruppen (LED₂) können auch eine Serienschaltung mehrerer LED-Gruppen (LED₂ₐ, LED_{2b}) sein. Eine LED-Gruppe im Sinne dieser Offenbarung umfasst mindestens eine LED. LED steht hierbei als Abkürzung für lichtemittierende Diode.

In der erfindungsgemäßen Vorrichtung ist jeweils eine Stromquelle in Form eines LED-Treibers (LED DRV) je LED-Gruppe (LED₁ₐ, LED_{1b}, LED₂) vorgesehen.

Dieser integrierte Schaltkreis der integrierten Schaltkreise (IC1, IC2 bis ICn) oder ein Teil desselben ermittelt hierbei aus den so ermittelten Spannungsabfallwerten beispielsweise einen minimalen Spannungsabfallwert oder einen anderen charakteristischen Wert. Bei dem charakteristischen Wert kann es sich beispielsweise auch, um eine Alternative zu benennen, um den zweit kleinsten Spannungsabfallwert minus eines geeigneten Vorhalts handeln. Eine solche Methode zur Bestimmung des charakteristischen Werts hat den Vorteil, dass ein offener Stromregelanschluss die Regelung nicht verhindert und eine Überspannung verhindert. Der integrierte Schaltkreis bestimmt durch die Bestimmung der Abweichung dieses charakteristischen Werts von einem Sollwert mittels eines Reglers (RA) und der besagten Stromquelle in Form ihres zugehörigen Transistors (T1 bis Tn) die potenzielle Ausgabespannung für diesen integrierten Schaltkreis an seinem Regelbus-Ausgang zum Regelbus (RB) hin. Ist das Potenzial des Regelbusses (RB) gegen das Bezugspotenzial (GND), also die Regelspannung (V_{R}) am vierten Widerstand (R₄), zu klein, so wird durch den integrierten Schaltkreis der Strom durch seinen Transistor (T1 bis Tn) reduziert, um mehr Strom aus den Konstantstromquellen (IQ) des integrierten Schaltkreises durch den vierten Widerstand (R₄) zu leiten und so die Regelspannung am vierten Widerstand (R₄) zu erhöhen. Dies ist jedoch nicht möglich, wenn gleichzeitig bei einem anderen integrierten Schaltkreis das Potenzial des Regelbusses (RB) gegen das Bezugspotenzial (GND), also die Regelspannung (V_{R}) am vierten Widerstand (R₄), korrekt ist, oder zu groß ist. In dem Fall nimmt nämlich der Transistor (T1 bis Tn) des anderen integrierten Schaltkreises den zusätzlich von der Konstantstromquelle (IQ) des integrierten Schaltkreises zu Verfügung gestellten Strom auf, womit dann eben nicht mehr Strom aus den Konstantstromquellen (IQ) des integrierten Schaltkreises durch den vierten Widerstand (R₄) geleitet wird. In dem Fall wird also die die Regelspannung am vierten Widerstand (R₄) nicht erhöht. Somit bestimmt der integrierte Schaltkreis mit dem niedrigsten charakteristischen Wert die Regelspannung (V_{R}) am vierten Widerstand (R₄). Ein Vorteil ist, dass dieses Zusammenwirken über den Strom erfolgt.

Die Arbeitsspannungen ihrer aktiven LED-Kanäle, also die Spannungsabfälle über die LED-Treiber des jeweiligen integrierten Schaltkreises, werden durch den Analog-zu-Digitalwandler (ADC) des integrierten Schaltkreises (IC1, IC2,...ICn) dabei immer zu einem Zeitpunkt gemessen, bei dem der jeweilige LED-Kanal des integrierten Schaltkreises (IC1, IC2,...ICn) einen Strom treibt. Dies ist insbesondere in den Ein--Phasen der PWM-Ansteuerung der jeweiligen LED-Kanäle der Fall. Wird also eine LED-Gruppe durch den LED-Treiber (LED-DRV) eines integrierten Schaltkreises mit elektrischem Strom versorgt, so ist dies eine aktive LED-Gruppe. Für den jeweiligen integrierten Schaltkreis ist dies ein aktiver LED-Kanal.

Der Regler (RA) wählt dabei aus den aktiv geschalteten LED-Kanälen einen Referenzkanal, dessen aktuelle Spannung als Eingangsgröße für den Regelkreis benutzt wird. Es wird, wie bereits erwähnt, nicht zwangsläufig der kleinste Spannungswert als Referenz gewählt. Vielmehr wird ein mittels einer Filterung und einer Fehlerbetrachtung bewerteter niedriger Wert zur Auswahl des Referenzkanals herangezogen. Über eine Hysterese wird sichergestellt, dass Störungen und Rauschen der Messergebnisse nicht zu einem Offset der Regelspannung führen.

### Weiterhin gilt:

Integrierte Schaltkreise, bei denen kein LED-Kanal aktiv ist (also dauerhaft abgeschaltet), schalten ihren Ausgang zum Regelbus (RB) beispielsweise über einen jeweiligen Schalter (SW) hochohmig. Hierdurch nehmen sie an der Regelung der Ausgangsspannung (V0) des Spannungsreglers (VREG) an seinem Spannungsreglerausgang (Vₒᵤₜ) gegen das Bezugspotenzial (GND) nicht teil. Wenn keiner der integrierten Schaltkreise am Regelbus (RB) den Regelbus (RB) treibt [Alle Schalter (SW) aller Schaltkreise (IC1 bis ICn) sind hochohmig.], dann wird über den vierten Widerstand (R4) sichergestellt, dass die Regelspannung (V_{R}) am vierten Widerstand (R₄) und damit die Regelbusspannung (V_{RB}) minimal wird und somit die maximale Versorgungsspannung am Spannungsreglerausgang (V_{OUT}) zur Verfügung steht, sobald wieder ein Treiber (LED-DRV) der integrierten Schaltkreises (IC1 bis ICn) aktiviert wird, um eine der LED-Gruppen (LED₁, LED₂ bis LEDₙ) mit elektrischer Energie zu versorgen. Die Größe des vierten Widerstands (R4) muss so gewählt sein, dass mit dem Konstantstrom (I_{bias}) der Konstantstromquelle (IQ) nur eines treibenden integrierten Schaltkreises (IC1, IC2, ...) die notwendige Maximalspannung der Regelspannung (V_{R}) am vierten Widerstand (R₄) und damit der Regelbusspannung (V_{RB}) erreicht werden kann.

Optional kann beispielsweise mit einem beispielhaften Filterwiderstand (Rf) und einer beispielhaften Filterkapazität (Cf) ein Filter realisiert werden, welcher Störungen der Regelspannung (VR) am vierten Widerstand (R4) auf dem Regelbus (RB) vom Strom-zu-Spannungswandler (VC-C) fernhält und so eine gefilterte Regelbusspannung (V_{RB}) erzeugt.

### Alternative Regelbus-Auslegung:

Eine weitere Möglichkeit ist, auf den Regelbus (RB) nicht direkt eine Steuerspannung auszugeben, sondern zum Zwecke der größeren Störfestigkeit ein PWM-Signal zu erzeugen, welches dann über ein geeignetes Tiefpassfilter (Rf, Cf) in die Regelspannung für den Strom-zu-Spannungswandler (VC-C) (OP0, T0 und R3) gewandelt wird. Beispielhaft ist hier das Tiefpassfilter durch den Filterwiderstand (Rf) und die Filterkapazität (Cf) realisiert. Andere Realisierungen des Tiefpassfilters sind natürlich möglich.

Dafür wird das oben beschriebene Regelverfahren nun abgewandelt.

Der Spannungsregler (VREG) wird durch einen zusätzlichen Strom (I_{ADJ}) in seinen Rückkopplungspfad (R1, R2) vertrimmt. Hier wird beispielhaft wieder ein Linearregler als Spannungsregler (VREG) angenommen, der nach einer internen Referenz des Spannungsreglers (VREG) die Spannung an seinem Spannungsreglerausgang (Vₒᵤₜ) über den ersten Widerstand (R1) nachregelt. Es sind erfindungsgemäß, wie bereits erwähnt, aber auch andere Regler einsetzbar.

Der Betrag dieses zusätzlichen Stroms (I_{ADJ}) wird durch die Regelspannung (V_{R}) an einem vierten Widerstand (R₄) eines gemeinsamen Regelbusses (RB) der beteiligten ICs (IC1, IC2, bis ICn) gegenüber dem Bezugspotenzial (GND) mit Hilfe eines Spannungs-zu-Strom-Wandlers (VC-C) gesteuert. Der Spannungs-zu Strom-Wandler (VC-C) umfasst in dem Beispiel der Figur 1 den nullten Differenzverstärker (OP0), den dritten Widerstand (R3) und den nullten Transistor (T0). Eine Verringerung der Regelspannung (V_{R}) am vierten Widerstand (R₄) und damit der Regelbusspannung (V_{RB}) führt zu einer Erhöhung der LED-Versorgungsspannung in Form einer Spannungserhöhung der Ausgangsspannung (V0) am Spannungsreglerausgang (V_{OUT}) gegen das Bezugspotenzial (GND).

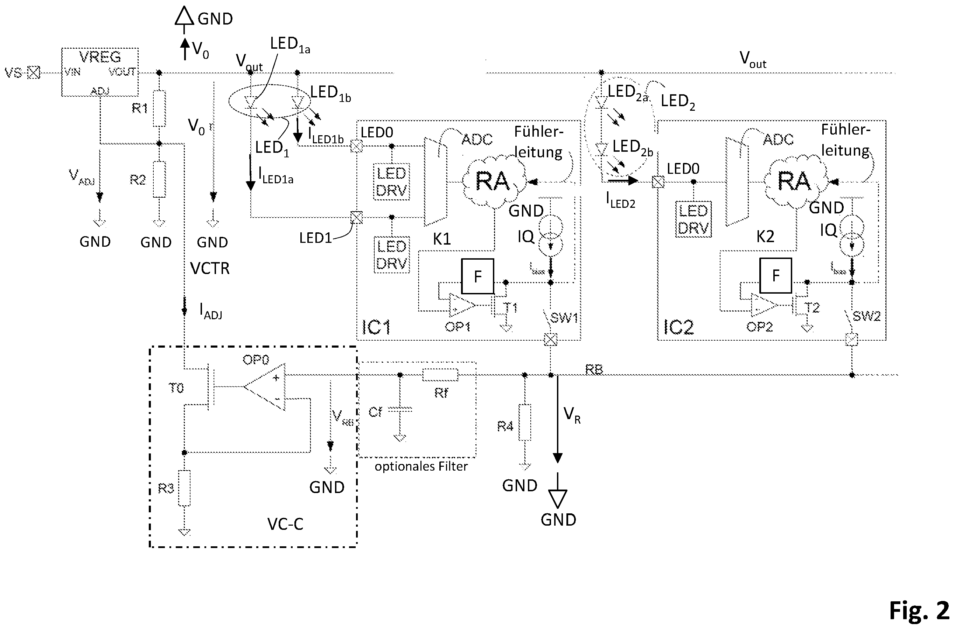

Alle angeschlossenen integrierten Schaltkreise (IC1, IC2, bis ICn) stellen nun durch PWM-Modulation die mittlere Regelspannung (V_{R}) am vierten Widerstand (R₄) und damit die Regelbusspannung (V_{RB}) an diesem Regelbus (RB) ein, wobei die niedrigste von einem integrierten Schaltkreis (IC1, IC2 ...) auf den Regelbus (RB) ausgegebene mittlere PWM-modulierte Spannung sich tatsächlich einstellt. Die integrierten Schaltkreise (IC1 bis ICn) werden hinsichtlich der Phasenlage der PWM-Perioden des auf den Regelbus (RB) ausgegebenen PWM-Signals synchronisiert. Diese Modifikation ist beispielhaft in Figur 2 dargestellt.

Dies wird in dem ersten integrierten Schaltkreis (IC1) durch den Open-Drain-Treiber aus erstem Differenzverstärker (OP1) und erstem Transistor (T1) sichergestellt. Nun jedoch wird durch den ersten Differenzverstärker (OP1) die Differenz zwischen dem Potenzial des ersten Knotens (K1) und der gefilterten Regelspannung (V_{R}) am vierten Widerstand (R₄) massiv verstärkt, sodass der erste Transistor (T1) entweder voll sperrt oder voll durchschaltet. Ein Filter (F) filtert dabei den Spannungsverlauf der Regelspannung (V_{R}) am vierten Widerstand (R₄) und bildet so ein Signal der mittleren Regelspannung (V_{R}) am vierten Widerstand (R₄), das durch den ersten Differenzverstärker (OP1) mit der Referenzspannung am ersten Knoten (K1) verglichen wird. Der Filter (F) ist bevorzugt ein integrierendes Filter, beispielsweise ein Tiefpassfilter.

In dem zweiten integrierten Schaltkreis (IC2) wird dies durch den Open-Drain-Treiber aus zweitem Differenzverstärker (OP2) und zweitem Transistor (T2) sichergestellt. Nun jedoch wird durch den zweiten Differenzverstärker (OP2) die Differenz zwischen dem Potenzial des zweiten Knotens (K2) und der gefilterten Regelspannung (V_{R}) am vierten Widerstand (R₄) massiv verstärkt, sodass der zweite Transistor (T2) entweder voll sperrt oder voll durchschaltet. Ein Filter (F) filtert dabei den Spannungsverlauf der Regelspannung (V_{R}) am vierten Widerstand (R₄) und bildet so ein Signal der mittleren Regelspannung (V_{R}) am vierten Widerstand (R₄), das durch den zweiten Differenzverstärker (OP2) mit der Referenzspannung am zweiten Knoten (K2) verglichen wird. Der Filter (F) ist bevorzugt ein integrierendes Filter, beispielsweise ein Tiefpassfilter.

In einem optionalen dritten integrierten Schaltkreis (IC3) wird dies durch den Open-Drain-Treiber aus einem dritten Differenzverstärker (OP3) und einem dritten Transistor (T3) sichergestellt. Nun jedoch wird durch den dritten Differenzverstärker (OP3) die Differenz zwischen dem Potenzial des dritten Knotens (K3) und der gefilterten Regelspannung (V_{R}) am vierten Widerstand (R₄) massiv verstärkt, sodass der dritte Transistor (T3) entweder voll sperrt oder voll durchschaltet. Ein Filter (F) filtert dabei den Spannungsverlauf der Regelspannung (V_{R}) am vierten Widerstand (R₄) und bildet so ein Signal der mittleren Regelspannung (V_{R}) am vierten Widerstand (R₄), das durch den dritten Differenzverstärker (OP3) mit der Referenzspannung am dritten Knoten (K3) verglichen wird. Der Filter (F) ist bevorzugt ein integrierendes Filter, beispielsweise ein Tiefpassfilter.

In einem optionalen vierten integrierten Schaltkreis (IC4) wird dies durch den Open-Drain-Treiber aus einem vierten Differenzverstärker (OP4) und einem vierten Transistor (T4) sichergestellt. Nun jedoch wird durch den vierten Differenzverstärker (OP4) die Differenz zwischen dem gefilterten Potenzial des vierten Knotens (K4) und der mittleren Regelspannung (V_{R}) am vierten Widerstand (R₄) massiv verstärkt, sodass der vierte Transistor (T4) entweder voll sperrt oder voll durchschaltet. Ein Filter (F) filtert dabei den Spannungsverlauf der Regelspannung (V_{R}) am vierten Widerstand (R₄) und bildet so ein Signal der mittleren Regelspannung (V_{R}) am vierten Widerstand (R₄) dass durch den vierten Differenzverstärker (OP4) mit der Referenzspannung am vierten Knoten (K4) verglichen wird. Der Filter (F) ist bevorzugt ein integrierendes Filter, beispielsweise ein Tiefpassfilter.

Dies setzt sich für weitere optionale integrierte Schaltkreise bis zu einem optionalen n-ten integrierten Schaltkreis (ICn) so fort.

In dem optionalen n-ten integrierten Schaltkreis (ICn) wird dies durch den Open-Drain-Treiber aus einem n-ten Differenzverstärker (OPn) und einem n-ten Transistor (Tn) sichergestellt. Nun jedoch wird durch den n-ten Differenzverstärker (OPn) die Differenz zwischen dem Potenzial des n-ten Knotens (Kn) und der gefilterten Regelspannung (V_{R}) am vierten Widerstand (R₄) massiv verstärkt, sodass der n-te Transistor (Tn) entweder voll sperrt oder voll durchschaltet. Ein Filter (F) filtert dabei den Spannungsverlauf der Regelspannung (V_{R}) am vierten Widerstand (R₄) und bildet so ein Signal der mittleren Regelspannung (V_{R}) am vierten Widerstand (R₄), das durch den n-ten Differenzverstärker (OPn) mit der Referenzspannung am n-ten Knoten (Kn) verglichen wird. Der Filter (F) ist bevorzugt ein integrierendes Filter, beispielsweise ein Tiefpassfilter.

In jedem IC (IC1 bis ICn) wird über einen Regler (RA) die Spannung am jeweiligen Knoten (K1, K2, bis Kn) erfasst und über den jeweiligen zugehörigen Differenzverstärker (OP1, OP2, bis OPn) durch Veränderung des Mittelwerts der PWM-modulierten Regelspannung (V_{R}) am vierten Widerstand (R₄) nachgeregelt.

Da jeder IC (IC1 bis ICn) damit nur einen Strom aus dem Regelbus (RB) gegen das Bezugspotenzial (GND) mittels seiner Transistoren (T1 bis Tn) ableiten kann, ist es wieder nötig, dass über eine jeweilige Konstantstromquelle (IQ) oder entsprechend angeschlossene Widerstände (hier nicht eingezeichnet) dem Regelbus (RA) ein elektrischer Strom (I_{bias}) zugeführt wird.

Die angeschlossenen integrierten Schaltkreise (IC1, IC2, bis ICn) geben ihre Regelbusausgangsspannung somit als PWM-moduliertes Signal aus. Das PWM-modulierte Signal weist dabei einen Tastgrad (duty_cycle_{PWM}) auf. Lt. Wikipedia gibt der Tastgrad (auch Aussteuergrad, englisch duty cycle) für eine periodische Folge von Impulsen gemäß Normung das Verhältnis der Impulsdauer zur Periodendauer an. Der Tastgrad wird als Verhältniszahl der Dimension Zahl mit einem Wertebereich von 0 bis 1 oder 0 bis 100 % angegeben. Das PWM-modulierte Signal weist darüber hinaus eine obere Logikspannung V_{HIGH} und eine untere Logikspannung V_{LOW} auf. Der resultierende Spannungsmittelwert Vₘᵢₜₜₑₗ berechnet sich zu Vₘᵢₜₜₑₗ= duty_cycle_{PWM} ^{∗} (V_{HIGH} - V_{LOW}). Er entspricht der analogen Ausgabespannung, die vom Regler (RA) des jeweiligen integrierten Schaltkreises (IC1 bis ICn) ermittelt wurde. Die Frequenzen der durch die integrierten Schaltkreise (IC1 bis ICn) ausgegebenen PWM-Signale müssen für alle angeschlossenen integrierten Schaltkreise (IC1 bis ICn) annähernd gleich sein. Ebenso sollte für alle integrierten Schaltkreise (IC1 bis ICn) gelten, dass die von den jeweiligen Open-Drain-Treibern (OP1 & T1, OP2 & T2 bis OPn &Tn) ausgegebenen Spannungen V_{HIGH} und V_{LOW} der integrierten Schaltkreise (IC1, IC2, bis ICn) annähernd gleich sind.

In einer anderen Variante stellen alle angeschlossenen integrierten Schaltkreise (IC1, IC2, ...) die Regelbusspannung (V_{RB}) an diesem Regelbus (RB) ein, indem sie ein gemeinsames PWM-Signal erzeugen, dessen Spannungsmittelwert durch einen Tiefpassfilter (Rf und Cf) am Spannungs-zu-Strom-Wandler (VC-C) anliegt. Dazu beginnt ein integrierter Schaltkreis der integrierten Schaltkreise (IC1 bis ICn), deren ausgegebene PWM einen Tastgrad (duty_cycle_{PWM}) kleiner als 100% hat, seinen Ausgang auf die untere Logikspannung V_{LOW} zu treiben. Damit folgt die Regelbusspannung (V_{RB}) am Regelbus (RB) dieser fallenden Flanke und es ergibt sich eine ebenso fallende Spannungsflanke der Regelspannung (V_{R}) am vierten Widerstand (R₄), welche alle anderen integrierten Schaltkreise (IC1, IC2, bis ICn) am Regelbus (RB) detektieren müssen, um an dieser Flanke die Phase ihrer eigene PWM-Modulation der Ansteuerung ihres jeweiligen Transistors (T1 bis Tn) auszurichten. Damit wird die Synchronisierung der verschiedenen PWM-Signale der verschiedenen integrierten Schaltkreise (IC1, IC2, bis ICn) untereinander erreicht. Der integrierte Schaltkreis, dessen Ausgabesignal auf den Regelbus (RB) den kleinsten Tastgrad (duty_cycle_{PWM}) hat, bestimmt den resultierenden Tastgrad (duty_cycle_{PWM}) der Regelspannung (V_{R}) am vierten Widerstand (R₄) des Regelbusses (RB), da dessen Transistor die Regelspannung (V_{R}) am vierten Widerstand (R₄) am längsten auf das untere Spannungspotenzial V_{LOW} zieht.

Jeder integrierte Schaltkreis der integrierten Schaltkreise (IC1 bis ICn) weist einen Analog-zu-Digital-Wandler (ADC) auf. Jeder integrierte Schaltkreis der integrierten Schaltkreise (IC1, IC2 bis ICn) misst mittels seines Analog-zu-Digital-Wandlers (ADC) die Arbeitsspannungen seiner aktiven LED-Kanäle und/oder den Spannungsabfall über seine aktiven LED-Treiber (LED-DRV) und bestimmt durch die Abweichung von einem Sollwert mittels eines Reglers (RA) die Ausgabespannung an seinem Regelbus-Ausgang zum Regelbus (RB) hin. Die Arbeitsspannungen seiner aktiven LED-Kanäle und/oder den Spannungsabfall über seinen aktiven LED-Treibern (LED-DRV) werden durch den Analog-zu-Digitalwandler (ADC) des integrierten Schaltkreises (IC1, IC2, bis ICn) dabei immer zu einem Zeitpunkt gemessen, bei dem der jeweilige LED-Kanal des integrierten Schaltkreises (IC1, IC2, bis ICn) bzw. der zugehörige LED-Treiber (LED-DRV) einen Strom treibt. Dies ist insbesondere in den Ein--Phasen der PWM-Ansteuerung der jeweiligen LED-Kanäle der Fall.

Der Regler (RA) wählt dabei aus den aktiv geschalteten LED-Kanälen einen Referenzkanal, dessen aktuelle Spannung und/oder dessen Spannungsabfall über dem betreffenden aktiven LED-Treiber (LED-DRV) als Eingangsgröße für den Regelkreis benutzt wird. Es wird nicht zwangsläufig der kleinste Spannungswert dieser Größen als Referenz gewählt. Vielmehr wird ein mittels einer Filterung und einer Fehlerbetrachtung bewerteter niedriger Wert zur Auswahl des Referenzkanals herangezogen. Über eine Hysterese wird sichergestellt, dass Störungen und Rauschen der Messergebnisse nicht zu einem Offset der Regelspannung führen.

### Weiterhin gilt:

Integrierte Schaltkreise, bei denen kein LED-Kanal bzw. LED-Treiber (LED-DRV) aktiv ist (also dauerhaft abgeschaltet), schalten ihren Ausgang zum Regelbus (RB) beispielsweise über den besagten jeweiligen Schalter (SW) hochohmig. Wenn keiner der integrierten Schaltkreise am Regelbus (RB) denselben treibt, also alle Schalter (SW) hochohmig sind, dann wird über den vierten Widerstand (R4) sichergestellt, dass die Regelbusspannung (V_{RB}) minimal wird und somit die maximale Versorgungsspannung am Spannungsreglerausgang (V_{OUT}) zur Verfügung steht, sobald wieder ein Treiber aktiviert wird. Die Größe des vierten Widerstands (R4) muss so gewählt sein, dass mit dem Konstantstrom (I_{bias}) nur bei einem treibenden integrierten Schaltkreis (IC1, IC2, bis ICn) die notwendige Maximalspannung der Regelbusspannung (V_{RB}) erreicht werden kann.

Optional kann beispielsweise mit einem beispielhaften Filterwiderstand (Rf) und einer beispielhaften Filterkapazität (Cf) ein Filter realisiert werden, welcher Störungen auf dem Regelbus (RB) vom Strom-zu-Spannungswandler (CVC-C) fernhält.

Bevorzugt wird auch hier ein Filter (F) wie zuvor beschrieben verwendet.

### Beschreibung der Figuren

Figur 1 zeigt ein erstes Ausführungsbeispiel der erfindungsgemäßen Vorrichtung. Über einen Versorgungsspannungsanschluss (VS) und das Bezugspotenzials (GND) wird die Vorrichtung mit Energie versorgt. Der Spannungsregler (VREG) ist mit seinem Spannungseingang (VIN) mit dem Versorgungsspannungsanschluss (VS) verbunden. Der Spannungsregler (VREG) liefert an seinem Spannungsreglerausgang (Vₒᵤₜ) eine Ausgangsspannung (V₀) gegen das Bezugspotenzial (GND). Der beispielhafte integrierte Schaltkreis der Figur 1 weist beispielhaft und zur besseren Übersicht nur einen ersten integrierten Schaltkreis (IC1) und einen zweiten integrierten Schaltkreis (IC2) auf.

Der erste integrierte Schaltkreis (IC1) entnimmt über einen ersten LED-Treiber (LED-DRV) und eine erste LED-Gruppe (LED₁ₐ) und über einen weiteren LED-Treiber (LED-DRV) und eine weitere erste LED-Gruppe (LED_{1b}) jeweils elektrischen Strom aus dem Spannungsreglerausgang (Vₒᵤₜ) des Spannungsreglers (VREG).

Der zweite integrierte Schaltkreis (IC2) entnimmt über einen zweiten LED-Treiber (LED-DRV) und eine zweite LED-Gruppe (LED₂) ebenfalls elektrischen Strom aus dem Spannungsreglerausgang (Vₒᵤₜ) des Spannungsreglers (VREG). Bei den LED-Treibern (LED-DRV) handelt es sich, wie beschrieben, typischerweise um Stromquellen.

Ein erster Analog-zu-Digital-Wandler (ADC) des ersten integrierten Schaltkreises (IC1) erfasst die Spannungsabfälle über die LED-Treiber des ersten integrierten Schaltkreises (IC1). Ein erster Regler (RA) des ersten integrierten Schaltkreises (IC1) bildet aus diesen Messwerten des ersten Analog-zu-Digitalwandlers (ADC) des ersten integrierten Schaltkreises (IC1) ein erstes Regelwertsignal am ersten Knoten (K1). Ein erster Differenzverstärker (OP1) des ersten integrierten Schaltkreises (IC1) vergleicht das Potenzial dieses ersten Knotens (K1) und damit den Wert des ersten Regelwertsignals mit dem Potenzial auf dem Regelbus (RB) in Form der Regelspannung (V_{R}) am vierten Widerstand (R₄). Ist das Potenzial auf dem Regelbus (RB) in Form der Regelspannung (V_{R}) am vierten Widerstand (R₄) höher als das Potenzial des ersten Regelwertsignals am ersten knoten (K1), so erniedrigt der erste Differenzverstärker (OP1) mittels des ersten Transistors (T1) das Potenzial dieses Regelbusses (RB) in Form der Regelspannung (V_{R}) am vierten Widerstand (R₄). Hierzu öffnet er den ersten Transistor (T1) in diesem Fall, sodass dann elektrischer Strom vom Regelbus (RB) zum Bezugspotenzial (GND) hin abfließen kann. Die Ausgangsspannung des ersten Differenzverstärkers (OP1) kann dabei als erste Referenzspannung einer spannungsabhängigen Transistorstromquelle aufgefasst werden, die durch den ersten Transistor (T1) gebildet wird.

Ein zweiter Analog-zu-Digital-Wandler (ADC) des zweiten integrierten Schaltkreises (IC2) erfasst die Spannungsabfälle über die LED-Treiber des zweiten integrierten Schaltkreises (IC2). Ein zweiter Regler (RA) des zweiten integrierten Schaltkreises (IC2) bildet aus diesen Messwerten des zweiten Analog-zu-Digitalwandlers (ADC) des zweiten integrierten Schaltkreises (IC2) ein zweites Regelwertsignal am zweiten Knoten (K2). Ein zweiter Differenzverstärker (OP2) des zweiten integrierten Schaltkreises (IC2) vergleicht das Potenzial dieses zweiten Knotens (K2), und damit den Wert des zweiten Regelwertsignals, mit dem Potenzial auf dem Regelbus (RB) in Form der Regelspannung (V_{R}) am vierten Widerstand (R₄). Ist das Potenzial auf dem Regelbus (RB) in Form der Regelspannung (V_{R}) am vierten Widerstand (R₄) höher als das Potenzial des zweiten Regelwertsignals am zweiten Knoten (K2), so erniedrigt der zweite Differenzverstärker (OP2) mittels des zweiten Transistors (T2) das Potenzial dieses Regelbusses (RB) in Form der Regelspannung (V_{R}) am vierten Widerstand (R₄). Hierzu öffnet er den zweiten Transistor (T2) in diesem Fall, sodass dann elektrischer Strom vom Regelbus (RB) zum Bezugspotenzial (GND) hin abfließen kann. Die Ausgangsspannung des zweiten Differenzverstärkers (OP2) kann dabei als zweite Referenzspannung einer spannungsabhängigen Transistorstromquelle aufgefasst werden, die durch den zweiten Transistor (T2) gebildet wird.

Ist der Betrag der Regelspannung (V_{R}) am vierten Widerstand (R₄) gleich oder niedriger als das Potenzial des zweiten Regelwertsignals am zweiten Knoten (K2), so schließt der zweite Differenzverstärker (OP2) den zweiten Transistor (T2), sodass ein größerer Anteil des Konstantstroms (I_{bias}) der Bias-Stromquellen (IQ) des integrierten Schaltkreises (IC1, IC2) den vierten Widerstand (R4) durchfließt und somit die Regelspannung (V_{R}) über den vierten Widerstand (R4) erhöht. Dies gelingt jedoch nur, wenn nicht in einem anderen integrierten Schaltkreis der Betrag der Regelspannung (V_{R}) am vierten Widerstand (R₄) kleiner als das Potenzial des Regelwertsignals dieses anderen integrierten Schaltkreises an dessen Knoten ist.

Bei dieser Konstruktion bestimmt immer das betragsmäßig niedrigste Regelwertsignal, also der integrierte Schaltkreis der integrierten Schaltkreise (IC1, IC2) mit dem kleinsten Potenzial an seinem jeweiligen Knoten (K1 bis Kn) die Regelspannung (V_{R}) am vierten Widerstand (R₄) und damit die Regelbusspannung (V_{RB}).

Über Schalter (SW1, SW2) können die einzelnen integrierten Schaltkreise (IC1, IC2) von dem Regelverfahren mittels externer Datenbusbefehle über einen nicht eingezeichneten Kommunikationsbus, der bevorzugt alle integrierten Schaltkreise (IC1, IC2) verbindet, ausgeschlossen werden oder sich selbst von dem Regelverfahren ausschließen. Dies ist dann notwendig, wenn keine der LED-Gruppen (LED₁ₐ, LED_{1b}, LED₂) des betreffenden integrierten Schaltkreises betrieben wird. Konstantstromquellen (IQ), die jeweils Teil der integrierten Schaltkreise (IC1, IC2) sind, speisen einen Konstantstrom (I_{bias}) in den Regelbus (RB) ein. Der Summenstrom, der durch die integrierten Schaltkreise (IC1, IC2) eingespeisten jeweiligen Konstantströme, fällt über den vierten Widerstand (R4) als Regelspannung (V_{R}) ab, wenn er nicht durch einen oder mehrere der Transistoren (T1, T2) innerhalb der integrierten Schaltkreise (IC1, IC2) gegen das Bezugspotenzial (GND), typischerweise teilweise, abgeleitet wird.

Das Spannungssignal auf dem Regelbus (RB), die Regelspannung (V_{R}), wird in dem Beispiel der Figur 1 durch einen beispielhaften Tiefpass bestehend aus einer Filterkapazität (Cf) und einem Filterwiderstand (Rf) zur Regelbusspannung (V_{RB}) gefiltert.

Ein Spannungs-zu-Strom-Wandler (VC-C), bestehend aus einem dritten Widerstand (R3), einem nullten Transistor (T0) und einem nullten Differenzverstärker (OP0), wandelt die Regelbusspannung (V_{RB}) in einen zusätzlichen Strom (I_{ADJ}) eines Spannungsregelsignals (VCTR) um. Dieser zusätzliche Strom (I_{ADJ}) durchfließt den ersten Widerstand (R1) des Rückkopplungsspannungsteilers (R1, R2) des Spannungsreglers (VREG) und verzieht damit den Regeleingang (ADJ) des Spannungsreglers (VREG) in Abhängigkeit von der Regelbusspannung (V_{RB}) und damit von der Regelspannung (V_{R}).

Figur 2 zeigt ein zweites Ausführungsbeispiel der erfindungsgemäßen Vorrichtung.

Im Gegensatz zur Figur 1 sind die integrierten Schaltkreise (IC1, IC2) der Figur 2 mit einem Filter (F) versehen, um eine PWM-Modulation auf dem Regelbus (RB) vornehmen zu können.

Eine solche Vorrichtung erlaubt auf einfache Weise eine Regelung des Spannungsreglers (VREG) zur Versorgung komplexerer LED-Anordnungen, die aus mehreren integrierten Schaltkreisen mit elektrischer Energie versorgt werden. Erfindungsgemäß wurde erkannt, dass dies mit einem stromgesteuerten Spannungsregler besonders einfach ist. Hierbei ist der Summenstrom (I_{S}) durch den vierten Widerstand (R4) das Ist-Wert-Signal und der Eingang des Spannung-zu-Strom-Wandlers (VC-C) der beispielhafte Eingang eines um die betreffenden Bauteile (VREG, R1, R2, VC-C) erweiterten stromgesteuerten Spannungsreglers. Durch das stromgeführte Signal ist die Konstruktion im Gegensatz zum Stand der Technik besonders robust gegen EMV-Einstrahlungen und Potentialversatz.

### Abkürzungsliste (nicht in den Figuren)

- IC3: dritter integrierter Schaltkreis;
- IC4: vierter integrierter Schaltkreis;
- ICn: n-ter integrierter Schaltkreis;
- I_{S}: Summenstrom der eingespeisten Bias-Ströme (I_{Bias}) aller mit dem Regelbus (RB) verbunden integrierten Schaltkreise (IC1 bis ICn);
- K3: dritter Knoten innerhalb des dritten integrierten Schaltkreises (IC3). Die Potenzialdifferenz zwischen dem dritten Knoten und dem Bezugspotenzial (GND) stellt die Referenzspannung für den dritten Transistor (T3) des dritten integrierten Schaltkreises (IC3) dar, die den Strom durch den dritten Transistor (T3) des dritten integrierten Schaltkreises (IC3) einstellt.
- K4: vierter Knoten innerhalb des vierten integrierten Schaltkreises (IC4). Die Potenzialdifferenz zwischen dem vierten Knoten und dem Bezugspotenzial (GND) stellt die Referenzspannung für den vierten Transistor (T4) des vierten integrierten Schaltkreises (IC4) dar, die den Strom durch den vierten Transistor (T4) des vierten integrierten Schaltkreises (IC4) einstellt.
- Kn: n-ter Knoten innerhalb des n-ten integrierten Schaltkreises (ICn). Die Potenzialdifferenz zwischen dem n-ten Knoten und dem Bezugspotenzial (GND) stellt die Referenzspannung für den n-ten Transistor (Tn) des n-ten integrierten Schaltkreises (ICn) dar, die den Strom durch den n-iten Transistor (Tn) des n-ten integrierten Schaltkreises (ICn) einstellt.
- LED₃: dritte LED-Gruppe, deren Strom durch den dritten integrierten Schaltkreis (IC3) geregelt wird;
- LED₄: vierte LED-Gruppe, deren Strom durch den vierten integrierten Schaltkreis (IC4) geregelt wird;
- LEDₙ: n-te LED= n-te LED-Gruppe, deren Strom durch den n-ten integrierten Schaltkreis (ICn) geregelt wird;
- OP3: dritter Differenzverstärker des dritten integrierten Schaltkreises (IC3);
- OP4: vierter Differenzverstärker des vierten integrierten Schaltkreises (IC4);
- OPn: vierter Differenzverstärker des n-ten integrierten Schaltkreises (ICn);
- T3: dritter Transistor des dritten integrierten Schaltkreises (IC3);
- T4: vierter Transistor des vierten integrierten Schaltkreises (IC4);
- Tn: n-ter Transistor des n-ten integrierten Schaltkreises (ICn);

### Bezugszeichenliste

- ADC: Analog-zu-Digital-Wandler, auch als Messmittel bezeichnet;
- ADJ: Regeleingang des Spannungsreglers (VREG) für das Spannungsregelsignal (VCTR);
- Cf: Filterkapazität;
- F: Filter;
- GND: Bezugspotenzial;
- I_{ADJ}: zusätzlicher Strom;
- I_{Bias}: Konstantstrom der jeweiligen Bias-Stromquelle (IQ), der über den Regelbusanschluss des jeweiligen integrierten Schaltkreises (IC1, IC2) in den Regelbus (RB) eingespeist wird. Der Bias-Strom ist bevorzugt ein zeitlich konstanter Strom zur Arbeitspunkteinstellung der vorgeschlagenen Vorrichtung.
- IC1: erster integrierter Schaltkreis;
- IC2: zweiter integrierter Schaltkreis;
- IQ: Konstantstromquelle eines integrierten Schaltkreises der integrierten Schaltkreise (IC1, IC2 bis ICn);
- I_{LED1a}: Strom durch die erste LED (LED₁ₐ) der ersten LED-Gruppe (LED₁)
- I_{LED1b}: Strom durch die zweite LED (LED_{1b}) der ersten LED-Gruppe (LED₁)
- I_{LED2}: Strom durch die erste LED (LED₂ₐ) und die zweite LED (LED_{2b}) der zweiten LED-Gruppe (LED₂)
- K1: erster Knoten innerhalb des ersten integrierten Schaltkreises (IC1). Die Potenzialdifferenz zwischen dem ersten Knoten (K1) und dem Bezugspotenzial (GND) stellt die Referenzspannung für den ersten Transistor (T1) des ersten integrierten Schaltkreises (IC1) dar, die den
- K2: Strom durch den ersten Transistor (T1) des ersten integrierten Schaltkreises (IC1) einstellt. zweiter Knoten innerhalb des zweiten integrierten Schaltkreises (IC2). Die Potenzialdifferenz zwischen dem zweiten Knoten (K2) und dem Bezugspotenzial (GND) stellt die Referenzspannung für den zweiten Transistor (T2) des zweiten integrierten Schaltkreises (IC2) dar, die den Strom durch den zweiten Transistor (T2) des zweiten integrierten Schaltkreises (IC2) einstellt.
- LED₁: erste LED-Gruppe, deren Strom durch den ersten integrierten Schaltkreis (IC1) geregelt wird;
- LED₁ₐ: erste LED der ersten LED-Gruppe (LED₁);
- LED_{1b}: zweite LED der ersten LED-Gruppe (LED₁);
- LED₂: zweite LED-Gruppe, deren Strom durch den zweiten integrierten Schaltkreis (IC2) geregelt wird;
- LED₂ₐ: erste LED der zweiten LED-Gruppe (LED₂);
- LED_{2b}: zweite LED der zweiten LED-Gruppe (LED₂);
- LED0: erster LED-Anschluss eines integrierten Schaltkreises;
- LED1: zweiter LED-Anschluss eines integrierten Schaltkreises;
- LED DRV: LED-Treiber eines integrierten Schaltkreises der integrierten Schaltkreise (IC1, IC2 bis ICn);
- OP0: nullter Differenzverstärker;
- OP1: erster Differenzverstärker des ersten integrierten Schaltkreises(IC1);
- OP2: zweiter Differenzverstärker des zweiten integrierten Schaltkreises (IC2);
- R₁: erster Widerstand;
- R₂: zweiter Widerstand;
- R₃: dritter Widerstand;
- R4: vierter Widerstand;
- RA: Regler des jeweiligen integrierten Schaltkreises;
- RB: Regelbus;
- Rᵢ: internes Regelsignal des jeweiligen integrierten Schaltkreises;
- Rf: Widerstand des Filters (F);
- SW1: Schalter des ersten integrierten Schaltkreises (IC1);
- SW2: Schalter des zweiten integrierten Schaltkreises (IC1);
- T0: nullter Transistor;
- T1: erster Transistor des ersten integrierten Schaltkreises (IC1);
- T2: zweiter Transistor des zweiten integrierten Schaltkreises (IC2);
- V₀: Ausgangsspannung des Spannungsreglers (VREG) an seinem Spannungsreglerausgang (Vout) gegen das Bezugspotenzial (GND)
- V_{ADJ}: Spannungswert des Spannungsregelsignals (VCTR) gegen ein Bezugspotenzial (GND);
- VC-C: Spannung-zu-Strom-Wandler (englisch external voltage to current converter), der bevorzugt nicht Teil der integrierten Schaltkreise (IC1, IC2) und/oder des Spannungsreglers (VREG) ist und der beispielsweise aus einem nullten Transistor (T0), einem Verstärker (OP0) und einem dritten Widerstand (R3) bestehen kann.
- VCTR: Spannungsregelsignal;
- VIN: Spannungseingang des Spannungsreglers (VREG);
- Vₒᵤₜ: Spannungsreglerausgang des Spannungsreglers (VREG);
- V_{R}: Regelspannung am vierten Widerstand (R₄);
- V_{RB}: Regelbusspannung;
- VREG: Spannungsregler;
- VS: Versorgungsspannungsanschluss des Spannungsreglers (VREG);

### Liste der zitierten Schriften

DE 10 318 780 A1,
DE 10 2005 028 403 B4,
DE 10 2006 055 312 A1,
EP 1499 165 B1,
EP 2 600 695 B1,
US 7 157 866 B2,
US 8 319 449 B2,
US 8 519 632 B2,
US 2007/0 139 317 A1,
US 2008 / 0 122 383 A1,
US 2009 / 0 230 874 A1,
US 2010 / 0 026 209 A1,
US 2010 / 0 201 278 A1,
US 2011/0 012 521 A1,
US 2011 / 0 043 114 A1,
US 2012/0 268 012 A1,
WO 2013 / 030 047 A1.

## Patentansprüche

1. Verfahren zur Regelung der Ausgangsspannung (V₀) am Ausgang (Vₒᵤₜ) eines Spannungsreglers (VREG)
- zur Versorgung einer Beleuchtungsvorrichtung,
- die mindesten zwei integrierte Schaltkreise (IC1, IC2) aufweist und
- die jeweils mindestens eine LED-Gruppe (LED₁ₐ, LED_{1b}, LED₂) je integriertem Schaltkreis (IC1, IC2) aufweist, mit elektrischer Energie, wobei jeder integrierte Stromkreis (IC1, IC2) je LED-Gruppe eine dieser zugehörigen Stromquelle (LED DRV) aufweist, und wobei die Beleuchtungsvorrichtung weiter einen Regelbus (RB) aufweist, der eine Regelspannung (V_{R}) gegenüber einem Bezugspotential (GND) aufweist, **umfassend die Schritte**
- Erzeugen einer Ausgangsspannung (V₀) mittels des Spannungsreglers (VREG) an dessen Ausgang (Vₒᵤₜ);
- Einstellen jeweils eines LED-Gruppen-Stromes (I_{LED1a}, I_{LED1b}, I_{LED2}) durch die jeweiligen LED-Gruppen (LED₁ₐ, LED_{1b}, LED₂), die jeweils mit dem Ausgang (Vₒᵤₜ) des Spannungsreglers (VREG) verbunden sind, jeweils mittels der der LED-Gruppe (LED₁ₐ, LED_{1b}, LED₂) zugehörigen Stromquelle (LED DRV);
- Erfassen der jeweiligen Spannungsabfälle über die jeweiligen Stromquellen (LED DRV) der jeweiligen LED-Gruppen (LED₁ₐ, LED_{1b}, LED₃₂) als jeweiligen Spannungsabfallwert dieser jeweiligen Stromquellen (LED DRV) innerhalb des jeweiligen integrierten Schaltkreises;
**gekennzeichnet durch** die Schritte
- Auswählen eines jeweiligen Spannungsabfallwerts einer Stromquelle (LED DRV) jedes integrierten Schaltkreises (IC1, IC2) aus den Spannungsabfallwerten der Stromquellen (LED DRV) dieses jeweiligen integrierten Schaltkreises (IC1, IC2) als kennzeichnenden Spannungsabfallwert dieses integrierten Schaltkreises (IC1, IC2) und Erzeugen eines Regelwertsignals an einem Knoten (K1, K2) dieses jeweiligen integrierten Schaltkreises (IC1, IC2) entsprechend diesem kennzeichnenden Spannungsabfallwert dieses jeweiligen integrierten Schaltkreises (IC1, IC2);
- Reduktion des Betrags der Regelspannung (V_{R}) **durch** diesen jeweiligen integrierten Schaltkreis (IC1, IC2), wenn der Betrag der Regelspannung (V_{R}) größer ist als der Betrag des Regelwertsignals an dem Knoten (K1, K2) dieses jeweiligen integrierten Schaltkreises (IC1, IC2);
- Regelung der Ausgangsspannung (V₀) des Spannungsreglers (VREG) an seinem Ausgang (Vₒᵤₜ) in Abhängigkeit von der Regelspannung (V_{R}) oder einer aus der Regelspannung (V_{R}) abgeleiteten Regelbusspannung (V_{RB}), wobei der Spannungsregler (VREG) als spannungsgesteuerter Spannungsregler ausgebildet ist.

2. Vorrichtung zur Versorgung mindestens zweier LED-Gruppen (LED₁ₐ, LED_{1b}, LED₂) mit elektrischer Energie,
- wobei die Vorrichtung einen Spannungsregler (VREG) mit einem Spannungsreglerausgang (Vₒᵤₜ) aufweist,
- wobei die Vorrichtung mindestens zwei integrierte Schaltkreise (IC1, IC2) aufweist,
- wobei die Vorrichtung einen Regelbus (RB) aufweist,
- wobei der Regelbus (RB) eine Regelspannung (V_{R}) gegenüber einem Bezugspotenzial (GND) aufweist,
- wobei jeder der integrierten Schaltkreise (IC1, IC2) zumindest einen LED-Anschluss (LED0, LED1) für zumindest eine LED-Gruppe (LED₁ₐ, LED_{1b}, LED₂) aufweist, mit dem jeweils eine LED-Gruppe (LED₁ₐ, LED_{1b}, LED₂) ausgangsseitig verbindbar ist, und
- wobei die LED-Gruppen eingangsseitig jeweils mit dem Spannungsreglerausgang (Vₒᵤₜ) verbindbar sind,
- wobei jeder der integrierten Schaltkreise (IC1, IC2) zumindest einen als Stromquelle ausgebildeten LED-Treiber (LED DRV) je LED-Gruppe (LED₁ₐ, LED_{1b}, LED₂) für die Energieversorgung dieser LED-Gruppe (LED₁ₐ, LED_{1b}, LED₂) über den dieser LED-Gruppe (LED₁ₐ, LED_{1b}, LED₂) zugehörigen LED-Anschluss (LED0, LED1) aufweist und
- wobei jeder der integrierten Schaltkreise (IC1, IC2) zumindest ein Messmittel (ADC) zur Erfassung der Spannungsdifferenzen zwischen den Potenzialen von LED-Anschlüssen (LED0, LED1) dieses integrierten Schaltkrieses (IC1, IC2) und dem Bezugspotenzial (GND) aufweist,
**gekennzeichnet dadurch,**
- **dass** jeder der integrierten Schaltkreise (IC1, IC2) einen lokalen Regler (RA) aufweist, der dazu eingerichtet ist, aus den durch sein Messmittel (ADC) erfassten Spannungsabfallwerten einen Spannungsabfallwert als kennzeichnenden Spannungsabfallwert dieses integrierten Schaltkreises (IC1, IC2) auszuwählen und ein Regelwertsignal an einem Knoten (K1, K2) dieses integrierten Schaltkreises (IC1, IC2) entsprechend diesem kennzeichnenden Spannungsabfallwert dieses integrierten Schaltkreises (IC1, IC2) zu erzeugen und den Betrag der Regelspannung (V_{R}) mittels eines jeweiligen Transistors (T1, T2) dieses jeweiligen integrierten Schaltkreises (IC1, IC2) zu erniedrigen, wenn dieser Betrag der Regelspannung (V_{R}) größer ist als der Betrag des Regelwertsignals des betreffenden integrierten Schaltkreises (IC1, IC2) am Knoten (K1, K2) des integrierten Schaltkreises (IC1, IC2) und
- **dass** der Spannungsregler (VREG) als spannungsgesteuerter Spannungsregler ausgebildet ist, wobei seine Ausgangsspannung (V₀) von der Regelspannung (V_{R}) oder einer daraus abgeleiteten Regelbusspannung (V_{RB}) abhängt.

## Claims

1. Method for regulating the output voltage (Vₒ) at the output (Vₒᵤₜ) of a voltage regulator (VREG) for supplying a lighting device,
- having a plurality of, but at least two, integrated circuits (IC1, IC2) and
- having in each case at least one LED group (LED₁ₐ, LED_{1b}, LED₂) per circuit (IC1, IC2) with electrical energy by means of a plurality of current sources (LED DRV) each associated with one of these LED groups
comprising the steps
- Generating an output voltage (Vₒ) by means of the voltage regulator (VREG) at the output (Vₒᵤₜ) of the voltage regulator (VREG);
- Setting of a respective LED group current (I_{LED1a}, I_{LED1b}, I_{LED2}) by the LED groups (LED₁ₐ, LED_{1b}, LED₂) connected to the output (Vₒᵤₜ) of the voltage regulator (VREG) by means of one current source (LED DRV) per LED group (LED₁ₐ, LED_{1b}, LED₂);
- Detecting respective voltage drops across the respective current sources (LED DRV) of the respective LED groups (LED₁ₐ, LED_{1b}, LED₂) as the value of the respective voltage drop of these respective current sources (LED DRV) within the respective integrated circuit;
**characterized by** the steps
- Selecting a respective voltage drop value of a current source (LED DRV) of each integrated circuit (IC1, IC2) from the voltage drop values of the current sources (LED DRV) of that respective integrated circuit (IC1, IC2) as a characteristic voltage drop value of that integrated circuit (IC1, IC2), and generating a control value signal at a node (K1, K2) of that respective integrated circuit (IC1, IC2) according to that characteristic voltage drop value of that respective integrated circuit (IC1, IC2);
- Reduction of the magnitude of a control voltage (V_{R}) by that respective integrated circuit (IC1, IC2) when the magnitude of the control voltage (V_{R}) is greater than the magnitude of the control value signal at the node (K1, K2) of that respective integrated circuit (IC1, IC2);
- Control of the output voltage (Vₒ) of the voltage regulator (VREG) at its output (Vₒᵤₜ) as a function of the control voltage (V_{R}) and/or a control bus voltage (V_{RB}) derived from the control voltage (V_{R}).

2. Device for supplying at least two LED groups (LED₁ₐ, LED_{1b}, LED₂) with electrical energy
- wherein the device comprises a voltage regulator (VREG) having a voltage regulator output (Vₒᵤₜ),
- wherein the device comprises at least two integrated circuits (IC1, IC2),
- wherein the device comprises a control bus (RB),
- wherein the control bus (RB) has a control voltage (V_{R}) with respect to a reference potential (GND),
- wherein each of the integrated circuits (IC1, IC2) having at least one LED connection (LED0, LED1) for at least one LED group (LED₁ₐ, LED_{1b}, LED₂), to which one of each LED group (LED₁ₐ, LED_{1b}, LED₂) can be connected on the output side, and
- wherein the LED groups (LED₁ₐ, LED_{1b}, LED₂) can each be connected to the voltage regulator output (Vₒᵤₜ) on their input side,
- wherein each of the integrated circuits (IC1, IC2) having at least one LED driver (LED DRV), designed as a current source, per LED group (LED₁ₐ, LED_{1b}, LED₂) for supplying power to this LED group (LED₁ₐ, LED_{1b}, LED₂) via the LED connection (LED0, LED1) associated with this LED group (LED₁ₐ, LED_{1b}, LED₂), and
- wherein each of the integrated circuits (IC1, IC2) comprises at least one measuring means (ADC) for detecting voltage differences between the potentials of the LED connections (LED0, LED1) of this integrated circuit (IC1, IC2) and the reference potential (GND),
**characterized in**
- **in that** each of the integrated circuits (IC1, IC2) has a local controller (RA) which is set up to select a voltage drop value as a characteristic voltage drop value of this integrated circuit (IC1, IC2) from the voltage drop values detected by its measuring means (ADC) and to generate a control value signal at a node (K1, K2) of this integrated circuit (IC1, IC2) in accordance with said characteristic voltage drop value of said integrated circuit (IC1, IC2), and decreasing the magnitude of the control voltage (VR) by means of a respective transistor (T1, T2) of said respective integrated circuit (IC1, IC2) when said magnitude of the control voltage (VR) is larger than the magnitude of the control value signal of said respective integrated circuit (IC1, IC2) at the node (K1, K2) of said integrated circuit (IC1, IC2); and
- **in that** the voltage regulator (VREG) is designed as a voltage-controlled voltage regulator, its output voltage (Vₒ) being dependent on the control voltage (V_{R}) or a control bus voltage (V_{RB}) derived therefrom.

## Revendications

1. Procédé de régulation de la tension de sortie (Vₒ) à la sortie (Vₒᵤₜ) d'un Régulateur de tension (VREG) pour l'alimentation d'un dispositif d'éclairage,
- qui comporte plusieurs, mais au moins deux, circuits intégrés (IC1, IC2) et
- qui comprend au moins un groupe de LED (LED₁ₐ, LED_{1b}, LED₂) par circuit (IC1, IC2) avec d'énergie électrique au moyen d'une source de courant (LED DRV) reliée à chacun de ces groupes de LED,
comprenant les étapes suivantes
- Génération d'une tension de sortie (Vₒ) au moyen du régulateur de tension (VREG) sur la sortie (Vₒᵤₜ) du régulateur de tension (VREG);
- Réglage d'un courant de groupe de LED respectif (I_{LED1a}, I_{LED1b}, I_{LED2}) par les groupes de LED (LED₁ₐ, LED_{1b}, LED₂) qui sont reliés à la sortie (Vₒᵤₜ) du régulateur de tension (VREG), au moyen d'une source de courant (LED DRV) par groupe de LED (LED₁ₐ, LED_{1b}, LED₂);
- Détection des chutes de tension respectives aux bornes des sources de courant (LED DRV) respectives des groupes de LED (LED₁ₐ, LED_{1b}, LED₂) respectifs en tant que valeur de la chute de tension respective de ces sources de courant (LED DRV) respectives à l'intérieur du circuit intégré respectif;
**caractérisé par** les étapes
- Sélectionner une valeur de chute de tension respective d'une source de courant (LED DRV) de chaque circuit intégré (IC1, IC2) parmi les valeurs de chute de tension des sources de courant (LED DRV) de ce circuit intégré (IC1, IC2) respectif en tant que valeur de chute de tension caractéristique de ce circuit intégré (IC1, IC2) et générer un signal de valeur de régulation au niveau d'un noeud (K1, K2) de ce circuit intégré (IC1, IC2) respectif correspondant à cette valeur de chute de tension caractéristique de ce circuit intégré (IC1, IC2) respectif;
- réduction de l'amplitude d'une tension de régulation (V_{R}) par ce circuit intégré (IC1, IC2) respectif lorsque l'amplitude de la tension de régulation (V_{R}) est supérieure à l'amplitude du signal de valeur de régulation au niveau du noeud (K1, K2) de ce circuit intégré (IC1, IC2) respectif;
- Régulation de la tension de sortie (Vₒ) du régulateur de tension (VREG) à sa sortie (Vₒᵤₜ) en fonction de la tension de régulation (V_{R}) et/ou d'une tension de bus de régulation (V_{RB}) dérivée de la tension de régulation (V_{R}).

2. Dispositif d'alimentation en énergie électrique d'au moins deux groupes de LED (LED₁ₐ, LED_{1b}, LED₂)
- le dispositif comprenant un régulateur de tension (VREG) avec une sortie de régulateur de tension (Vₒᵤₜ),
- le dispositif comprenant au moins deux circuits intégrés (IC1, IC2),
- le dispositif comprenant un bus de régulation (RB),
- le bus de régulation (RB) présentant une tension de régulation (VR) par rapport à un potentiel de référence (GND),
- chacun des circuits intégrés (IC1, IC2) présentant au moins une borne LED (LEDO, LED1) pour au moins un groupe de LED (LED₁ₐ, LED_{1b}, LED₂), avec laquelle un groupe de LED (LED₁ₐ, LED_{1b}, LED₂) respectif peut être relié côté sortie, et
- les groupes de LED (LED₁ₐ, LED_{1b}, LED₂) pouvant être reliés sur leur côté d'entrée respectivement à la sortie du régulateur de tension (Vₒᵤₜ),
- chacun des circuits intégrés (IC1, IC2) présente, par groupe de LED (LED₁ₐ, LED_{1b}, LED₂), par l'intermédiaire de la borne de LED (LED0, LED1) attribuée à ce groupe de LED (LED₁ₐ, LED_{1b}, LED₂), au moins un pilote de LED (LED DRV) qui est conçu comme source de courant pour l'alimentation électrique de ce groupe de LED (LED₁ₐ, LED_{1b}, LED₂), et
- chacun des circuits intégrés (IC1, IC2) comportant au moins un moyen de mesure (ADC) pour détecter des différences de tension entre les potentiels des bornes de LED (LED0, LED1) de ce circuit intégré (IC1, IC2) et le potentiel de référence (GND),
**caractérisé par**
- en ce que chacun des circuits intégrés (IC1, IC2) comporte une commande locale (RA) qui est agencée pour sélectionner, à partir des valeurs de chute de tension détectées par ses moyens de mesure (ADC), une valeur de chute de tension comme valeur de chute de tension caractéristique de ce circuit intégré (IC1, IC2), et à générer, au niveau d'un noeud (K1, K2) de ce circuit intégré (IC1, IC2), un signal de valeur de commande correspondant à la valeur de chute de tension caractéristique du circuit intégré (IC1, IC2), et à réduire l'amplitude de la tension de commande (VR) au moyen d'un transistor respectif (T1, T2) du circuit intégré respectif (IC1, IC2) lorsque l'amplitude de la tension de commande (VR) est supérieure à l'amplitude du signal de valeur de commande du circuit intégré (IC1, IC2) respectif au niveau du noeud (K1, K2) du circuit intégré (IC1, IC2); et
- en ce que le régulateur de tension (VREG) est conçu comme un régulateur de tension commandé en tension, sa tension de sortie (Vo) dépendant de la tension de régulation (VR) ou d'une tension de bus de régulation (VRB) qui en est dérivée.
